# EUROPEAN PATENT APPLICATION

(11) **EP 4 417 426 A1**
(43) Date of publication of application: **21.08.2024**
(21) Application number: 22895028.3
(22) Date of filing: 02.11.2022
(51) Int. Cl.: B41J 2/01, B41J 3/407, B41M 7/00, C09D 11/30, C09D 11/101

(54) **METHOD FOR PRINTING ON A NON-POROUS SUBSTRATE, INK FOR THE METHOD AND PRINTED NON-POROUS SUBSTRATE ACCORDING TO THE METHOD**

(30) Priority: 18.11.2021 ES 202131075
(71) Applicant: Torrecid, S.A., 12110 Alcora (Castellón) (ES)
(72) Inventor: RUIZ VEGA, Óscar, 12110 Alcora (Castellón) (ES)
(74) Representative: Carlos Hernando, Borja
(86) International application number: PCT/ES2022/070709
(87) International publication number: WO 2023/089210

(57) **Abstract**

The present invention describes a method for printing ink, by means of inkjet technology and curing, combining ultraviolet (UV) radiation (light-based curing) and infrared (IR) radiation (thermal curing), on a non-porous substrate. Also described is an ink composition for the method, and a printed non-porous substrate obtained according to the described method.

## Description

The present invention relates to a method for printing ink, by means of inkjet technology and curing, combining ultraviolet (UV) radiation (light-based curing) and infrared (IR) radiation (thermal curing), on a non-porous substrate, to an ink composition or formulation for the method and to a printed non-porous substrate obtained according to the method.

### PRIOR ART

At present, there is printing equipment by means of inkjet technology in which, once the motif has been printed on a non-porous substrate, a thermal curing is performed at a certain temperature that allows the printed motif to be integrated into the substrate. In this sense, an example is Spanish patent ES2424775B1 which describes an ink composition for printing on non-porous substrates that is subjected to thermal curing after printing.

Also in the prior art is European patent EP1658342B1 describing an inkjet ink composition for printing on ceramic substrates in which, in a preferred embodiment, it contemplates the possibility of thermal curing, and in another preferred embodiment, alternatively, ultraviolet curing.

However, these thermal curing or, alternatively, ultraviolet curing methods have a series of limitations. In the case of thermal curing, the objective is to remove the solvents from each droplet of ink, printed by means of inkjet technology, and thus fix the particles present in each droplet. However, it is observed that once the motif is printed, thermal curing is not fast enough, resulting in an expansion of the drop size and, therefore, a loss of definition and quality of the print. In addition, this type of curing causes the evaporation of the solvents in each print droplet to occur in what is called a "mountain shape", i.e. a gradual evaporation from the outside to the inside of the droplet. The result is the presence of residues and therefore defects in the print motif. On the other hand, ultraviolet curing also has a series of limitations. In this case, firstly, curing is excessively fast when applied to inkjet inks, which causes the solvent in each ink droplet being occluded in the coating generated by the layer polymerized by the action of the ultraviolet radiation. The consequence is the formation of defects in the printed motif when subsequent heat treatment is performed. Moreover, this type of ultraviolet curing requires high contents of acrylic components in the ink composition, which causes emission problems during the decomposition thereof in a subsequent heat treatment.

According to the described prior art, the present invention describes a method for printing ink, by means of inkjet technology and curing, combining UV radiation and IR radiation, on a non-porous substrate, combined with an ink composition or formulation for the method, which allow the limitations set forth above to be overcome. On the one hand, UV curing fixes the droplet, prevents it from expanding and allows the subsequent evaporation of the solvents by means of IR radiation to be vertical instead of in a "mountain shape". On the other hand, IR curing allows all of the solvent present in the droplet to be removed.

### GENERAL DESCRIPTION OF THE INVENTION

Throughout the invention and the claims, the word "comprises" and its variants do not intend to exclude other technical features, additives, components or steps. Furthermore, the word "comprises" includes the case "consists of". For those skilled in the art, other objects, advantages and features of the invention are inferred in part from the description and in part from the practice of the invention.

The present invention comprises, on the one hand, a method for printing, by means of inkjet technology, for printing on a non-porous substrate, comprising the following steps:
I. supplying a non-porous substrate;
II. printing at least one ink, preferably formulated according to the present invention, on the non-porous substrate by means of an inkjet technology printing station, with a predefined design and a grammage comprised between 15 g/m² and 250 g/m²;
III. subjecting the non-porous substrate with the printed design to curing with ultraviolet radiation;
III. subjecting the non-porous substrate with the printed design to curing with infrared radiation;
IV. introducing the non-porous substrate with the printed design in a firing kiln and firing at a temperature comprised between 350°C and 850°C, resulting in a non-porous substrate in which the printed design is fully integrated.

And, on the other hand, a printed non-porous substrate obtained according to the method described herein.

The term non-porous substrate, as used herein, refers to a surface not containing pores, and, therefore, is impermeable to liquids, preventing the penetration thereof along the thickness of the substrate. This type of surface can be achieved either due to the very nature of the substrate or by means of prior treatments such as glazing and firing. Examples of non-porous substrates, by way of non-limiting illustration, are glass, fired ceramic tile, fired tableware, plastic, steel metal surfaces, aluminum metal surfaces and varnished wood.

The term curing, as used herein, refers to the application of ultraviolet and/or infrared radiation on the printed motif which causes a chemical or physical change in the printed motif. Examples of curing, by way of non-limiting illustration, are the partial or complete activation of the ultraviolet curing compounds, partial or complete polymerization of the ultraviolet curing compounds, partial or complete cross-linking of the ultraviolet curing compounds, partial or complete evaporation of the solvents in the ink, among others.

According to the present invention, the ultraviolet radiation allows partial or complete curing of the deposited droplet such that the expansion thereof is prevented. Furthermore, it favors subsequent curing with infrared radiation being vertical. All this provides a better definition of the printed motif and prevents the formation of defects. In this sense the present invention contemplates the wavelength of the ultraviolet radiation being comprised between 280 nm and 400 nm. The selection of the final wavelength will depend on different technical aspects such as the printing grammage applied, the printing speed, the solids content in the ink, the type and content of photoinitiator, the type and content of ultraviolet curing inhibitor, among others.

At present, there are lamps that emit ultraviolet radiation by means of LED technology. These lamps are characterized by emitting this radiation in a very narrow wavelength range. In this sense, the present invention contemplates a preferred embodiment comprising, on the one hand, a method for printing, by means of inkjet technology, for printing on a non-porous substrate, comprising the following steps:
I. supplying a non-porous substrate;
II. printing at least one ink, preferably formulated according to the present invention, on the non-porous substrate by means of an inkjet technology printing station, with a predefined design and a grammage comprised between 15 g/m² and 250 g/m²;
III. subjecting the non-porous substrate with the printed design to curing with ultraviolet radiation using a LED technology lamp;
IV. subjecting the non-porous substrate with the printed design to curing with infrared radiation (6);
V. introducing the non-porous substrate with the printed design in a firing kiln (7) and firing at a temperature comprised between 350°C and 850°C, resulting in a non-porous substrate in which the printed design is fully integrated (2a).

And, on the other hand, a printed non-porous substrate manufactured according to the method described herein.

Similarly, the method according to the present invention comprises, after applying ultraviolet radiation, applying infrared radiation. This step allows eliminating the solvent present and, in this sense, also preventing possible defects in the printed motif. In this sense, the present invention is characterized in that the infrared lamp has a power comprised between 8 W and 35 W. The final selection of the value of the power will depend on several technical aspects such as the printing grammage applied, the printing speed, the solids content in the ink, the ratio of solvents in the ink, among others.

Another feature of the method according to the present invention is that the inkjet printing station emits droplets on the non-porous substrate with a fixed or variable volume, and the volume thereof is preferably comprised between 3 and 200 picoliters.

As described above, once the curing with ultraviolet radiation and infrared radiation has been performed, the motif printed on the non-porous substrate is subjected to a firing process in a firing kiln that uses any source of energy, at a temperature comprised between 350°C and 850°C. The selection of the temperature will depend on different technical aspects such as the type of non-porous substrate (glass, fired ceramic tile, fired tableware, etc.), grammage of the printed ink, the speed of the firing kiln if it is a continuous kiln, the residence time if it is a stationary kiln, among others. With this firing, the printed design adheres entirely to the surface of the non-porous substrate and develops the desired aesthetic effects.

Therefore, a preferred embodiment of the present invention contemplates a method for printing on a non-porous substrate where the firing kiln is an electric firing kiln.

Another preferred form of the present invention consists of a method where the non-porous substrate is glass. Therefore, the present invention contemplates, on the one hand, a method for printing, by means of inkjet technology, for printing on a glass substrate, comprising the following steps:
I. supplying a glass substrate;
II. printing at least one ink, preferably formulated according to the present invention, on the glass substrate by means of an inkjet technology printing station, with a predefined design and a grammage comprised between 15 g/m² and 250 g/m²;
III. subjecting the glass substrate with the printed design to curing with ultraviolet radiation;
IV. subjecting the glass substrate with the printed design to curing with infrared radiation (6);
V. introducing the glass substrate with the printed design in a firing kiln (7) and firing at a temperature comprised between 350°C and 850°C, resulting in a glass where the printed motif is fully integrated (2a).

And, on the other hand, a printed glass manufactured according to the method described herein.

Another preferred embodiment of the present invention also contemplates the possibility of the glass being intended for the automotive sector, such as front, side or rear automobile windows. Therefore, the invention comprises, on the one hand, a method for printing, by means of inkjet technology, for printing on a glass, comprising the following steps:
I. supplying a glass for automotion;
II. printing at least one ink, preferably formulated according to the present invention, on the glass for automotion by means of an inkjet technology printing station, with a predefined design and a grammage comprised between 15 g/m² and 150 g/m²;
III. subjecting the glass for automotion with the printed design to curing with ultraviolet radiation;
IV. subjecting the glass for automotion with the printed design to curing with infrared radiation (6);
V. introducing the glass for automotion with the printed design in a firing kiln (7) and firing at a temperature comprised between 600°C and 750°C, resulting in a glass substrate for automotion where the printed design is fully integrated (2a).

And, on the other hand, a printed glass for automotion manufactured according to the method described herein.

It should also be noted that the method for printing on a non-porous substrate according to the present invention does not limit the inclusion or incorporation of other processes or steps that provide other aesthetic properties or functionalities in addition to those protected in this invention, both before and after firing.

The present invention relates, in addition to the method for printing, to an ink composition for printing in the method comprising:
I. at least one solvent at a percentage by weight comprised between 20% and 60% of the weight of the ink, selected from the group comprising water, glycols, glycol ethers, glycol esters and alcohols;
II. at least one photoinitiator for ultraviolet curing at a percentage by weight comprised between 5% and 15% of the weight of the ink;
III. at least one ultraviolet curing inhibitory agent at a percentage by weight comprised between 0.5% and 4% of the weight of the ink;
IV. at least one solid particle at a percentage by weight comprised between 25% and 65% of the weight of the ink, and selected from the group comprising inorganic pigments, frits, inorganic compounds, metallic particles or a mixture thereof.
V. at least one dispersant at a percentage by weight comprised between 2% and 4% of the weight of the ink;
VI. at least one humectant at a percentage by weight comprised between 0.25% and 2% of the weight of the ink;
VII. at least one anti-foaming agent at a percentage by weight comprised between 0.25% and 1% of the weight of the ink.

According to the present invention, the ink comprises in its at least one photoinitiator. These products are widely available on the market. By way of non-limiting illustration, examples of commercial photoinitiators are Omnipol TP, Omnipol BL728, Omnirad 784, Omnirad BL750, Speedcure XKM, Speedcure MBI, Speedcure 7040, Irgacure 907, Irgacure 379 and Irgacure TPO.

The presence of an ultraviolet curing inhibitory agent in the composition of the ink object of invention allows achieving the method described herein, i.e., an ultraviolet curing to fix the droplet, but without completely occluding the solvent, and, subsequently, a complete vertical removal thereof without leaving any residues or defects. By way of non-limiting illustration, examples of commercial ultraviolet curing inhibitory agents are Genorad 16, Genorad 22, Genorad 23, Genorad 40 and Byk Max.

The ink composition according to the present invention is also characterized by comprising at least one dispersant. By way of non-limiting illustration, examples of dispersant formulations are polyacrylate salt, acrylate copolymer, high molecular weight acrylic copolymer, alkoxides, non-ionic modified fatty acid derivatives, carboxylic acid salt, phosphoric polyether, polycarboxylic acid salt or a mixture thereof.

Likewise, the ink according to the present invention comprises at least one humectant. By way of non-limiting illustration, examples of humectant formulations are a mixture of ethers with polyethylene-polypropylene glycol with monobenzyl ether and C8-C10 alcohols, polysiloxane polyether copolymer, anionic surfactants, non-ionic surfactants or a mixture thereof.

Another component comprising the ink object of invention is at least one anti-foaming agent to prevent the formation of bubbles when it is in the printing circuit and when printing takes place. By way of non-limiting illustration, examples of anti-foaming agent formulations are modified silicones, polydimethylsiloxanes, mineral oil derivatives, fatty acid derivatives or a mixture thereof.

### DESCRIPTION OF THE FIGURES

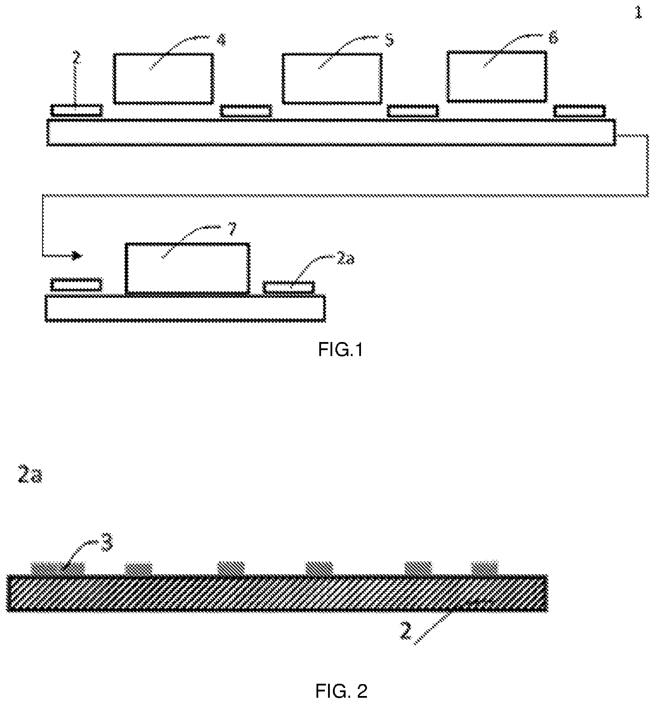

Figure 1 schematically depicts the method for printing on a non-porous substrate according to the invention.
Figure 2 schematically depicts the non-porous substrate with the design printed with the ink once firing has been performed according to the invention.

### PREFERRED EMBODIMENTS

In order to better understand the features of the invention, some of the preferred embodiments are described below as non-limiting examples in reference to the attached figures. In this sense, the following figures are provided by way of illustration and are not intended to be limiting of the present invention. Furthermore, the present invention covers all the possible combinations of particular and preferred embodiments indicated herein.

### Example 1. Method for printing on a glass intended for a rear window in automotion.

An ink composition (T1) to be applied by means of the inkjet method according to the present invention was prepared. The following table shows the ink composition (T1).

**Table 1**

| **Component** | **Typology** | **T1** |
|---|---|---|
| Ethylene glycol propyl ether | Solvent | 35 |
| Dipropylene glycol methyl ether | Solvent | 15 |
| Diethylene glycol ethyl ether | Solvent | 10 |
| Omnipol TP | UV curing photoinitiator | 2.5 |
| Speedcure XKM | UV curing photoinitiator | 2 |
| Irgacure 907 | UV curing photoinitiator | 6 |
| Genorad 16 | UV curing inhibitor | 2 |
| Frit | Solid particle | 15 |
| Inorganic black CuCrFe pigment | Solid particle | 10 |
| Polyacrylate salt | Dispersant | 1 |
| Non-ionic modified fatty acid derivatives | Dispersant | 0.5 |
| Carboxylic acid salt | Dispersant | 0.5 |
| Mixture of ethers with polyethylene-polypropylene glycol with monobenzyl ether and C8-C10 alcohols | Humectant | 0.25 |
| Modified silicones | Anti-foaming agent | 0.25 |

Once the ink has been obtained, printing was performed on a glass intended for a rear window in automotion according to the method (1) for printing, by means of inkjet technology, described herein and which comprised the following steps:
I. supplying a glass intended for a rear window in automotion (2);
II. printing the formulated ink (3) on the glass for a rear window in automotion (2) by means of an inkjet technology printing station (4) with a predefined design and a grammage of 20 g/m²;
III. subjecting the glass for a rear window in automotion with the printed design to curing with a mercury lamp which emits ultraviolet radiation at a wavelength of 380 nm (5);
IV. subjecting the glass for a rear window in automotion with the printed design to curing with a lamp that emits infrared radiation with a power of 16 W (6);
V. introducing the glass for a rear window in automotion with the printed design in an electric firing kiln (7) and firing at a maximum temperature of 700°C, resulting in a glass substrate for a rear window in automotion where the printed design is fully integrated (2a) and without aesthetic defects.

### Example 2. Method for printing on a glass intended for a front window in automotion.

An ink composition (T2) to be applied by means of the inkjet method according to the present invention was prepared. The following table shows the ink composition (T2).

**Table 2**

| **Component** | **Typology** | **T2** |
|---|---|---|
| Ethylene glycol butyl ether | Solvent | 10 |
| Dipropylene glycol methyl ether | Solvent | 20 |
| Omnipol TP | UV curing photoinitiator | 3 |
| Omnirad 784 | UV curing photoinitiator | 4 |
| Speedcure MBI | UV curing photoinitiator | 4 |
| Irgacure 379 | UV curing photoinitiator | 4 |
| Genorad 22 | UV curing inhibitor | 2.5 |
| Byk Max | UV curing inhibitor | 1.5 |
| Frit | Solid particle | 30 |
| Inorganic black CoO pigment | Solid particle | 15 |
| High molecular weight acrylic copolymer | Dispersant | 1 |
| Carboxylic acid salt | Dispersant | 2.5 |
| Polysiloxane polyether copolymer | Humectant | 0.75 |
| Anionic surfactants | Humectant | 0.75 |
| Polydimethylsiloxanes | Anti-foaming agent | 0.5 |
| Fatty acid derivatives | Anti-foaming agent | 0.5 |

Once the ink has been obtained, printing was performed on a glass intended for a front window in automotion according to the method (1) for printing, by means of inkjet technology, described herein and which comprised the following steps:
I. supplying a glass for a front window in automotion (2);
II. printing the formulated ink (3) on the glass for a front window in automotion (2) by means of an inkjet technology printing station (4) with a predefined design and a grammage of 40 g/m²;
III. subjecting the glass for a front window in automotion with the printed design to curing with a LED technology lamp that emits ultraviolet radiation at a wavelength of 395 nm (5);
IV. subjecting the glass for a front window in automotion with the printed design to curing with a lamp that emits infrared radiation with a power of 20 W (6);
V. introducing the glass for a front window in automotion with the printed design in a firing kiln (7) and firing at a maximum temperature of 610°C, resulting in a glass substrate for a front window in automotion where the printed design is fully integrated (2a) and without aesthetic defects.

### Example 3. Method for printing on fired ceramic tile.

An ink composition (T3) to be applied by means of the inkjet method according to the present invention was prepared. The following table shows the ink composition (T3).

**Table 3**

| **Component** | **Typology** | **T3** |
|---|---|---|
| Ethylene glycol propyl ether | Solvent | 10 |
| Triethylene glycol monobutyl ether | Solvent | 17,5 |
| Diethylene glycol ethyl ether | Solvent | 20 |
| Omnipol BL728 | UV curing photoinitiator | 1 |
| Omnirad BL750 | UV curing photoinitiator | 2 |
| Speedcure 7040 | UV curing photoinitiator | 2 |
| Genorad 23 | UV curing inhibitor | 0.25 |
| Genorad 40 | UV curing inhibitor | 0.25 |
| Frit | Solid particle | 20 |
| ZrSiO₄ | Solid particle | 20 |
| Acrylate copolymer | Dispersant | 0.75 |
| Alkoxides | Dispersant | 1.5 |
| Phosphoric polyether | Dispersant | 1.25 |
| Polycarboxylic acid salt | Dispersant | 0.5 |
| Mixture of ethers with polyethylene-polypropylene glycol with monobenzyl ether and C8-C10 alcohols | Humectant | 1.75 |
| Non-ionic surfactants | Humectant | 0.25 |
| Polydimethyl siloxanes | Anti-foaming agent | 0.5 |
| Mineral oil derivatives | Anti-foaming agent | 0.5 |

Once the ink has been obtained, printing was performed on a tile fired according to the method (1) for printing, by means of inkjet technology, described herein and which comprised the following steps:
I. supplying a fired tile (2);
II. printing the formulated ink (3) on the fired tile (2) by means of an inkjet technology printing station (4) with a predefined design and a grammage of 250 g/m²;
III. subjecting the fired tile to curing with a mercury lamp which emits ultraviolet radiation at a wavelength of 400 nm (5);
IV. subjecting the fired tile to curing with a lamp that emits infrared radiation with a power of 35 W (6);
V. introducing the fired tile in a firing kiln (7) and firing at a maximum temperature of 850°C, resulting in a fired tile substrate where the printed motif is fully integrated (2a) and without aesthetic defects.

### Example 4. Method for printing on glass.

A conductive ink composition (T4) to be applied by means of the inkjet method according to the present invention was prepared. The following table shows the ink composition (T4).

**Table 4**

| **Component** | **Typology** | **T4** |
|---|---|---|
| Ethylene glycol propyl ether | Solvent | 10 |
| Dipropylene glycol methyl ether | Solvent | 10 |
| Omnipol TP | UV curing photoinitiator | 2.5 |
| Speedcure XKM | UV curing photoinitiator | 2 |
| Irgacure 907 | UV curing photoinitiator | 6 |
| Genorad 16 | UV curing inhibitor | 2 |
| Frit | Solid particle | 10 |
| Ag nanoparticles | Solid particle | 55 |
| Polyacrylate salt | Dispersant | 1 |
| Non-ionic modified fatty acid derivatives | Dispersant | 0.5 |
| Carboxylic acid salt | Dispersant | 0.5 |
| Mixture of ethers with polyethylene-polypropylene glycol with monobenzyl ether and C8-C10 alcohols | Humectant | 0.25 |
| Modified silicones | Anti-foaming agent | 0.25 |

Once the ink has been obtained, printing was performed on glass according to the method (1) for printing, by means of inkjet technology, described herein and which comprised the following steps:
I. supplying a glass (2);
II. printing the formulated ink (3) on the glass (2) by means of an inkjet technology printing station (4) with a predefined design and a grammage of 120 g/m²;
III. subjecting the glass to curing with a mercury lamp which emits ultraviolet radiation at a wavelength of 365 nm (5);
IV. subjecting the glass to curing with a lamp that emits infrared radiation with a power of 32 W (6);
V. introducing the fired glass in a firing kiln (7) and firing at a maximum temperature of 250°C, resulting in a glass substrate where the printed motif is fully integrated (2a) and without aesthetic defects.

## Claims

1. A method (1) for printing, by means of inkjet technology, on a non-porous substrate, comprising the following steps:
I. supplying a non-porous substrate (2);
II. printing at least one ink composition on the non-porous substrate (2) by means of an inkjet technology printing station (4), with a predefined design and a grammage comprised between 15 g/m² and 250 g/m²;
III. subjecting the non-porous substrate to curing with a lamp that emits ultraviolet radiation (5);
IV. subjecting the non-porous substrate to curing with a lamp that emits infrared radiation (6);
V. introducing the non-porous substrate in a firing kiln (7) and firing at a maximum temperature comprised between 350°C and 850°C, resulting in a non-porous substrate where the printed motif is fully integrated (2a).

2. The method according to the preceding claim, wherein the wavelength of the ultraviolet radiation emitted by the lamp is comprised between 280 nm and 400 nm.

3. The method according to any one of the preceding claims, wherein the ultraviolet radiation is emitted by means of a LED technology lamp.

4. The method according to any one of the preceding claims, wherein the lamp that emits infrared radiation has a power comprised between 8 W and 35 W.

5. The method according to any one of the preceding claims, wherein the inkjet printing station (4) emits droplets on the non-porous substrate (2) with a fixed or variable volume, and the volume thereof is preferably comprised between 3 and 200 picoliters.

6. The method according to any one of the preceding claims, wherein the firing kiln (7) is an electric firing kiln.

7. The method according to any one of the preceding claims, wherein the non-porous substrate is a glass.

8. The method according to the preceding claim, wherein the glass is intended for the automotive sector.

9. An ink composition (3) for printing in the method (1) of claim 1, comprising:
I. at least one solvent at a percentage by weight comprised between 20% and 60% of the weight of the ink and selected from the group comprising water, glycols, glycol ethers, glycol esters, alcohols;
II. at least one photoinitiator for ultraviolet curing at a percentage by weight comprised between 5% and 15% of the weight of the ink;
III. at least one ultraviolet curing inhibitory agent at a percentage by weight comprised between 0.5% and 4% of the weight of the ink;
IV. at least one solid particle at a percentage by weight comprised between 25% and 65% of the weight of the ink and selected from the group comprising inorganic pigments, frits, inorganic compounds, metallic particles or a mixture thereof;
V. at least one dispersant at a percentage by weight comprised between 2% and 4% of the weight of the ink;
VI. at least one humectant at a percentage by weight comprised between 0.25% and 2% of the weight of the ink;
VII. at least one anti-foaming agent at a percentage by weight comprised between 0.25% and 1% of the weight of the ink.

10. A printed non-porous substrate (2a) obtained according to the method (1) described in any one of the preceding claims 1 to 8, wherein, after the method, the ink composition printed on the non-porous substrate lacks solvent.
